# EUROPEAN PATENT APPLICATION

(11) **EP 2 592 593 A2**
(43) Date of publication of application: **15.05.2013**
(21) Application number: 11803794.4
(22) Date of filing: 06.07.2011
(51) Int. Cl.: G06Q 50/00, G06K 7/10

(54) **METHOD FOR MANAGING CONTENTS IN NETWORK, AND WEB SERVER USED THERETO**

(30) Priority: 08.07.2010 KR 20100065715
(71) Applicant: Intellectual Discovery Co., Ltd., Seoul 135-745 (KR)
(72) Inventor: LEE, Sang Gyu, Seoul 137-070 (KR); LEE, Suk Joo, Yongin-si Gyeonggi-do 448-160 (KR); JEON, Yoon Ho, Seoul 156-827 (KR)
(74) Representative: Ter Meer Steinmeister & Partner
(86) International application number: PCT/KR2011/004943
(87) International publication number: WO 2012/005508

(57) **Abstract**

Disclosed are a method for managing contents in a network, and a web server used thereto. The method is implemented by allowing a web server to: include a storage unit for storing a code outputted to a printed matter and the mapping information of contents which are executed by a reader that has read the code; receive a request for transmitting the mapping information from the reader; and transmit the mapping information to the reader. According to the method, when the code outputted to the printed matter is read, the contents executed in the reader are changed into various contents such that the changed contents are used. In addition, a product user and a product seller obtain the learning information of a learner, such as the learning contents, through the reader, or product application information.

## Description

### [Technical Field]

The present invention relates to a method for managing contents in a network and a web server used thereto, and more particularly, to a method for managing contents in a network which can allow a user to use various contents by changing the contents executed by the reader into the various contents when the reader reads out a code from a printed matter, and which can allow a product user and a product seller to obtain the learning information of a learner, such as the learning contents, through the reader, or obtain product application information, and a web server using the same.

### [Background Art]

Recently, a printed matter product has been widely utilized for the purpose of education, in which, when a code-printed portion on a printed matter, such as an educative booklet on which invisible codes are printed, is scanned by the reader having a pen shape, a voice file previously stored in the reader is reproduced as contents corresponding to read-out codes.

However, the study system using the printed matter having the codes according to the related art represents limitations in that only the contents stored in the reader are executed and a product user and a product seller cannot obtain the learning information of a learner, such as the learning contents, through the reader, or product application information.

### [Disclosure]

### [Technical Problem]

It is an object of the present invention to provide a method for managing contents in a network which can allow a reader to use various contents by changing the contents executed by the reader into the various contents when the reader reads out a code from a printed matter, and which can allow a product user and a product seller to obtain the learning information of a learner, such as the learning contents, through the reader, or obtain product application information, and a web server using the same.

### [Technical Solution]

In order to achieve the above object, a method for managing contents in a network according to the invention includes providing a web server with a storage unit for storing a code output to a printed matter and mapping information about the contents which are executed by a reader which reads out the code; receiving a request for transmitting the mapping information in the web server from the reader; and transmitting the mapping information from the web server to the reader.

Preferably, the method further includes receiving contents execution information including information about the executed contents in the web server from the reader when the reader reads out the code output to the printed matter and executes contents corresponding to the code according to the mapping information.

Further, the method includes transmitting the contents execution information from the web server to a server of a seller of the reader.

Further, the code output to the printed matter is assigned by a code management server such that the code is not redundantly output to other printed matters.

Meanwhile, a web server according to the present invention includes a storage unit for storing a code output to a printed matter and mapping information of contents executed by a reader which reads out the code; a receiving unit for receiving a request for transmitting the mapping information from the reader; and a transmitting unit for transmitting the mapping information to the reader.

Preferably, the receiving unit receives contents execution information including information about the executed contents from the reader when the reader reads out the code output to the printed matter and executes contents corresponding to the code according to the mapping information.

Further, the transmitting unit transmits the contents execution information to a server of a seller of the reader.

Further, the code output to the printed matter is assigned by a code management server such that the code is not redundantly output to other printed matters.

### [Advantageous Effects]

According to the present invention, the various contents can be used by changing the contents executed in the reader into the various contents when the reader reads out the codes from the printed matter.

In addition, according to the present invention, a product user and a product seller can obtain the learning information of a learner, such as the learning contents, through the reader, or obtain product application information.

### [Description of Drawings]

FIG. 1 is a view showing a configuration of a system for managing contents in a network according to the present invention;

FIG. 2 is a block diagram showing functions of a web server used for a method for managing contents in a network according to the present invention; and

FIG. 3 is a flowchart illustrating an operational principle of the system for managing contents in a network according to the present invention.

### [Best Mode]

### [Mode for Invention]

Hereinafter, the present invention will be described in more detail with reference to the accompanying drawings. The same reference numbers are used throughout the drawings to refer to the same or like parts. Detailed descriptions of well-known functions and structures incorporated herein may be omitted to avoid obscuring the subject matter of the present invention.

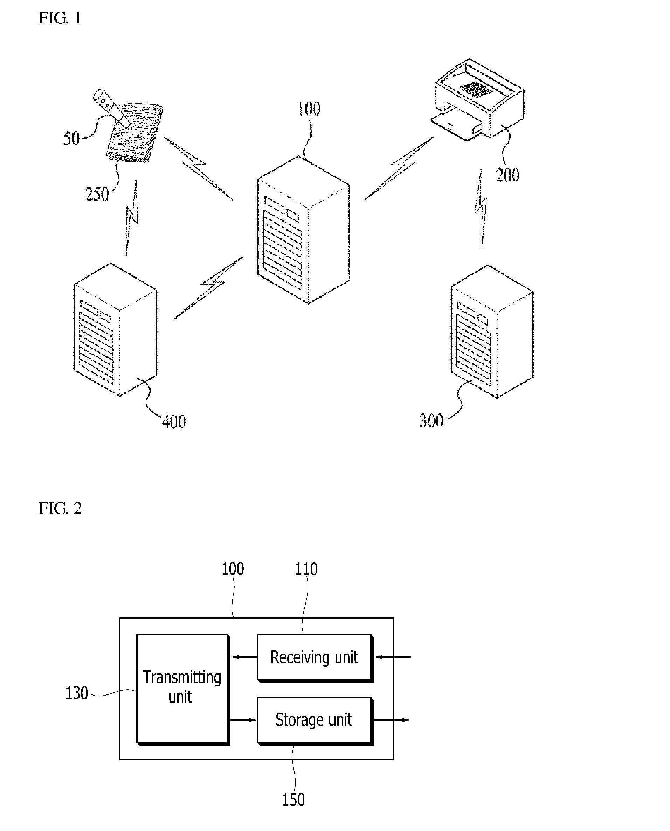

FIG. 1 is a view showing a configuration of a system for managing contents in a network according to the present invention. The contents of the present invention are executed by a reader 50 which reads out a code from a printed matter 250. Referring to FIG. 1, the system for managing contents in a network according to the present invention includes a web server 100, a printed-matter producing apparatus 200, a code management server 300, and a seller server 400.

When the code managing server 300 receives a request for producing a printed matter from an outside, the code managing server 300 performs functions of assigning to the requested printed matter 250, a code that has not been used for any previous printed matters in order to prohibit the same code from being redundantly used for mutually different printed matters and transmitting the assigned code to the printed-matter producing apparatus 200.

Meanwhile, the printed-matter producing apparatus 200 performs a function of producing the printed matter in which the assigned code from the code management server 300 is printed, and then, if the producing of the printed matter is completed, performs a function of transmitting printed-matter producing information to the code management server 300.

The web server 100 serves as a server which performs a function of managing contents according to the present invention. In detail, the web server 100 stores mapping information about contents which is executed by the reader 50. When the reader 50 reads out a code from the printed matter and requests the web server 100 to transmit the mapping information corresponding to the code, the web server 100 performs a function of transmitting the requested mapping information to the reader 50.

In addition, when the reader 50 reads out the code from the printed matter to which the code is output and executes the contents corresponding to the code, the reader 50 transmits contents execution information including the information about the executed contents to the web server 100. After storing the contents execution information received from the reader 50, the web server 100 transmits the contents execution information stored therein to the seller server 400 which is operated by a seller who sells the reader 50 to the user of the reader 50 every a predetermined time.

Meanwhile, the contents executed by the reader 50 are stored in the seller server 400 of the seller who sells the reader 50 and are regularly updated by the seller. Thus, the user accesses to the seller server 400 through his reader 50 to search for desired contents and downloads the desired contents to his reader 50 to use the desired contents.

In addition, the seller server 400 provides device-driver download and customer-support service functions necessary for using the reader 50 sold to the user.

FIG. 2 is a block diagram showing functions of a web server used for a method for managing contents in a network according to the present invention. Referring to FIG. 2, the web server 100 used for method for managing contents in a network according to the present invention includes a receiving unit 110, a storage unit 130, and a transmitting unit 150.

First, the receiving unit 110 of the web server 100 receives the request for transmitting the mapping information from the reader 50 and the contents execution information including the information about the contents executed by the reader 50.

The storage unit 130 of the web server 100 stores the mapping information about the contents executed by the reader 50 which reads out the code printed on the printed matter and a corresponding code. In addition, the storage unit 130 of the web server 100 stores the request for transmitting the mapping information and the contents execution information received at the receiving unit 110.

Meanwhile, the transmitting unit 150 of the web server 100 transmits the mapping information stored in the storage unit 130 to the reader 50 and the contents execution information to the seller server.

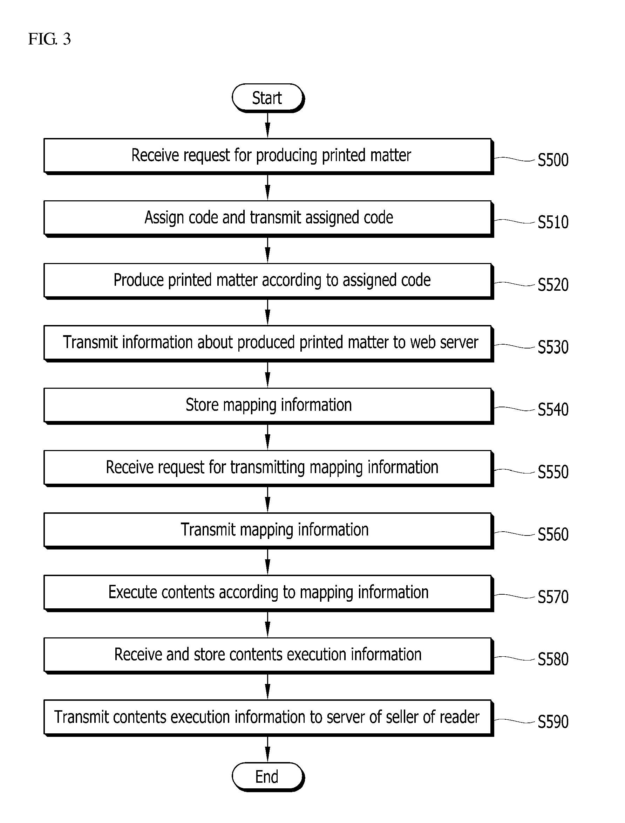

FIG. 3 is a flowchart illustrating an operational principle of the system for managing contents in a network according to the present invention. The operational principle of the system for managing contents in a network according to the present invention will be described with reference to FIGS. 1 to 3. First, in step S500, the code management server 300 receives a request for producing a printed matter from an external administrator terminal (not shown).

The information about a code previously assigned to a printed matter 250 has been stored in the code management server 300. In step S510, when the code management server 300, which receives the request for producing a printed matter, assigns a code to the requested printed matter 250, the code management server 300 excludes the codes that have been assigned to any previous printed matters in order to prohibit the same code from being redundantly assigned. Then, the code management server 300 transmits the assigned code to the printed-matter producing apparatus 200.

In step S520, the printed-matter producing apparatus 200, which receives the code assigned to the printed material from the code management server 300, produces the printed matter 250 such as a teaching material to which the assigned code is output. The produced printed matter 250 is transferred to a user having the reader 50 through the market.

Meanwhile, the printed-matter producing apparatus 200, which produces the printed matter to which the assigned code is output, transmits the printed-matter producing information including information about such as a kind, a price or a standard of the printed matter to the code management server 300. The code management server 300 updates the information about the codes which have been previously assigned and output to the printed matters based on the printed-matter producing information received from the printed-matter producing apparatus 200. Then, the code management server 300 stores the updated information therein.

Meanwhile, in step S530, the printed-matter producing apparatus 200 transmits the printed-matter producing information described above to the web server 100 as well as the code management server 300. In step S540, the web server 100, which receives the printed-matter producing information, stores in the storage unit 130 a mapping table in which maps the information about the contents corresponding to the codes output to the printed matters as following Table 1.

**Table 1**

| Serial No. | Code Information | Contents Information |
|---|---|---|
| 1 | 00 | Bird_song_sound.mp3 |
| 2 | 01 | Sea_image.avi |
| 3 | 10 | Water_stream_sound.mp3 |
| 4 | 11 | Eiffel_tower_image.avi |

That is, in Table 1, if the code information read out by the reader 50 is '00', the content having the file name of 'Bird_song_sound.mp3' is executed by the reader 50. If the code information read out by the reader 50 is '01', the content having the file name of 'Sea_image.avi' is executed by the reader 50.

Meanwhile, a user who purchases the reader 50 from a distributer accesses to the seller server 400 through the reader 50 to download the contents including 'Bird_song_sound.mp3', 'Sea_image.avi', 'Water_stream_sound.mp3', and 'Eiffel_tower_image.avi' which are uploaded to the seller server 400, to the memory of the reader 50.

Then, in step S550, the user accesses to the web server 100 to request to transmit the mapping information as denoted in Table 1, and thus, the receiving unit 110 of the web server 100 receives the request for transmitting the mapping information. In step S560, the web server 100 transmits the mapping information stored in the storage unit 130 to the reader 50 through the transmitting unit 150.

The reader 50 stores the mapping information downloaded from the web server 100 in the memory. Then, the user allows the reader 50 to read out a code from the printed matter 250, on which the code which means code information such as '00','01', '10', or '11' is printed. According to the embodiment of the present invention, various types of codes such as a bar code, a dot code or a line code may be used as the code.

When the code read out by the reader 50 has the code information of '00', the reader 50 executes the contents having the file name of 'Bird_song_sound.mp3', which are stored in the reader 50 through download from the seller server 400 and correspond to the mapping information stored in the memory.

Meanwhile, a bird picture is preferably drawn together with the code on the portion of the printed matter on which the code is printed.

Therefore, in step S570, when the user allows the reader 50 to scan the bird picture, the reader 50 executes the contents having the file name of 'Bird_song_sound.mp3', so that the user hears a bird song sound.

That is, since the contents executed by the reader 50 are determined based on the mapping table stored in the web server 100 as described above, the contents executed by the same printed matter 250 may be variously modified only by changing the mapping table of the web server 100.

Thus, if the contents are executed through the reader 50 according to the mapping information, the reader 50 transmits the contents execution information including information about the executed contents, the contents execution time, the product serial number of the reader 50, etc., to the web server 100. In step S580, the receiving unit 110 of the web server 100 receives the contents execution information and stores the contents execution information in the storage unit 130 of the web server.

In step S590, the web server 100 transmits the contents execution information to the seller server 400 every a predetermined time period.

Thus, an administrator of the seller server 400 may obtain information about the contents executed by each reader 50 and the execution time and frequency of the contents, and analyses the information about the application states of the reader 50 and the various contents, so that the analysis result may be utilized as basic data for developing the reader 50 in future.

In addition, by displaying the information about the contents executed by each reader 50 and the execution time and frequency of the contents on a website provided by the seller server 400, purchasers of the readers 50 may identify the application states of their readers 50.

That is, parents who provide the reader 50 as a learning tool to their children may obtain the information about the time, the type of contents and the use frequency of the contents used by their children by accessing the website. Thus, the parent may check study state of their children and effectively plan education schedules in advance.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

### [Industrial Applicability]

The present invention is applicable in the industrial field of online contents.

## Claims

1. A method for managing contents in a network, the method comprising:
providing a web server with a storage unit for storing a code output to a printed matter and mapping information about the contents which are executed by a reader which reads out the code;
receiving a request for transmitting the mapping information in the web server from the reader; and
transmitting the mapping information from the web server to the reader.

2. The method of claim 1, further comprising:
receiving contents execution information including information about the executed contents in the web server from the reader when the reader reads out the code output to the printed matter and executes contents corresponding to the code according to the mapping information.

3. The method of claim 2, further comprising:
transmitting the contents execution information from the web server to a server of a seller of the reader.

4. The method of claim 1, wherein the code output to the printed matter is assigned by a code management server such that the code is not redundantly output to other printed matters.

5. A web server comprising:
a storage unit for storing a code output to a printed matter and mapping information of contents executed by a reader which reads out the code;
a receiving unit for receiving a request for transmitting the mapping information from the reader; and
a transmitting unit for transmitting the mapping information to the reader.

6. The web server of claim 5, wherein the receiving unit receives contents execution information including information about the executed contents from the reader when the reader reads out the code output to the printed matter and executes the contents corresponding to the code according to the mapping information.

7. The web server of claim 6, wherein the transmitting unit transmits the contents execution information to a server of a seller of the reader.

8. The web server of claim 5, wherein the code output to the printed matter is assigned by a code management server such that the code is not redundantly output to other printed matters.
